# EUROPÄISCHE PATENTANMELDUNG

(11) **EP 0 823 520 A2**
(43) Veröffentlichungstag der Anmeldung: **11.02.1998**
(21) Anmeldenummer: 97112673.5
(22) Anmeldetag: 24.07.1997
(51) Int. Cl.: E05B 49/00

(54) **Authentikationseinrichtung mit elektronischer Authentikations-kommunikation**

(30) Priorität: 08.08.1996 DE 19632025
(71) Anmelder: DAIMLER-BENZ AKTIENGESELLSCHAFT, 70567 Stuttgart (DE)
(72) Erfinder: Brinkmeyer, Horst, Dr., 71336 Waiblingen (DE); Daiss, Michael, 70794 Filderstadt (DE); Schwegler, Günter, 71384 Weinstadt (DE)

(57) **Zusammenfassung**

Die Erfindung bezieht sich auf eine Authentikationseinrichtung mit einer Authentikationszieleinheit und einer benutzerseitigen Authentikationsschlüsseleinheit zur Benutzerauthentikation gegenüber der Zieleinheit, wobei die Schlüsseleinheit bei einem Authentikationskommunikationsvorgang elektronisch mit der Zieleinheit kommuniziert und ein elektronischer Authentikationskommunikationsvorgang selbsttätig bei Annäherung der Schlüsseleinheit an die Zieleinheit oder durch Betätigen eines an der Zieleinheit vorgesehenen Auslöseelementes aktiviert wird.

Erfindungsgemäß sind zwecks erhöhtem Schutz gegen unbefugte Authentikationsversuche an der Schlüsseleinheit Anzeigemittel zur Anzeige eines stattfindenden elektronischen Authentikationskommunikationsvorgangs und/oder Schaltmittel zur Freigabe bzw. Sperrung eines Authentikationskommunikationsvorgangs und/oder an der Zieleinheit Kommunikationsdauer-Überwachungsmittel vorgesehen, welche die Dauer eines Authentikationskommunikationsvorgangs überwachen und die Authentikation sperren, wenn diese Dauer eine vorgegebene Maximaldauer überschreitet.

Verwendung z.B. zur Authentikation bei Türschließanlagen oder elektronischen Wegfahrsperren von Kraftfahrzeugen.

## Beschreibung

Die Erfindung bezieht sich auf eine Authentikationseinrichtung mit elektronischer Authentikationskommunikation nach dem Oberbegriff des Anspruchs 1.

Derartige Einrichtungen finden beispielsweise bei Türschließanlagen und elektronischen Wegfahrsperren moderner Kraftfahrzeuge Verwendung, um die Aktivierung dieser Systeme nur der oder den dazu autorisierten Personen zu gestatten. Dabei bildet dann der fahrzeugseitige Teil der Türschließanlage bzw. der elektronischen Wegfahrsperre die Authentikationszieleinheit, gegenüber der sich der Benutzer als berechtigt ausweisen muß, wozu ihm eine zugehörige Authentikationsschlüsseleinheit auszuhändigen ist, üblicherweise in Gestalt eines sogenannten elektronischen Schlüssels. Ein Authentikationsvorgang beinhaltet eine elektronische Authentikationskommunikation, mit der verschlüsselte Codes zwischen der Zieleinheit und der Schlüsseleinheit übertragen werden, anhand derer dann das System prüft, ob die jeweilige Schlüsseleinheit und damit der diese besitzende Benutzer gegenüber der Zieleinheit zur Auslösung nachfolgender Aktionen, z.B. Entriegeln der Türschlösser der Türschließanlage oder Entsichern der elektronischen Wegfahrsperre, berechtigt ist. Gegenüber rein mechanischen Authentikationseinrichtungen, wie sie z.B. durch mechanische Schlüssel-Schloß-Systeme gegeben sind, bieten die Einrichtungen mit zusätzlicher oder ausschließlicher elektronischer Authentikationskommunikation einen höheren Manipulationsschutz.

Es sind Authentikationseinrichtungen bekannt, bei denen zur Aktivierung eines elektronischen Authentikationskommunikationsvorgangs vom Benutzer ein hierfür vorgesehenes Bedienelement an der Authentikationsschlüsseleinheit betätigt werden muß. Beispielsweise ist bei einer in der Offenlegungsschrift DE 42 34 822 A1 offenbarten Einrichtung dieser Art ein Tastschalter an eine Steuereinheit eines als Schlüsseleinheit fungierenden Senders angeschlossen. Durch Betätigen des Tastschalters wird der Sender veranlaßt, einen Erkennungscode für eine empfangende Zieleinheit auszusenden, die den empfangenen Code mit einem gespeicherten Code auf Übereinstimmung prüft. An die Steuereinheit ist außerdem eine lichtemittierende Diode angeschlossen, die den Betriebszustand des Senders anzeigt. Gegenüber diesen sogenannten bedienbaren Systemen bieten die gattungsgemäßen Authentikationseinrichtungen einen höheren Bedienkomfort, da bei ihnen der Authentikationskommunikationsvorgang keinen Bedienvorgang an der Schlüsseleinheit erfordert, sondern entweder selbsttätig bei ausreichender Annäherung der Schlüsseleinheit an die Zieleinheit oder durch Betätigen eines an der Zieleinheit vorgesehenen Auslöseelementes erfolgt.

Diese Einrichtungen stellen sogenannte bedienungslose Systeme dar, bei denen bei einem elektronischen Authentikationskommunikationsvorgang beispielsweise zunächst von der Zieleinheit drahtlos ein Signal zur Schlüsseleinheit übertragen wird, worauf letztere drahtlos ein codiertes Signal zurücküberträgt, welches in der Zieleinheit decodiert und verifiziert wird und danach gegebenenfalls die gewünschte Freigabe für weitere Aktionen bewirkt. Das einleitende Signal von der Ziel- zur Schlüsseleinheit kann als ein Beispiel lediglich zur Auslösung der Signalabgabe in der Schlüsseleinheit dienen, es kann jedoch als weiteres Beispiel auch eine Information, wie eine Zufallszahl, enthalten, die in dem Schlüsseleinheit weiterverarbeitet, d.h. codiert wird. Weiter kann dieses Signal auch ein Energieversorgungssignal für die Schlüsseleinheit darstellen, dem gegebenenfalls eine Nachricht beispielsweise durch Modulation überlagert sein kann.

Wenn der Authentikationskommunikationsvorgang selbsttätig aktiviert werden soll, sobald sich die Schlüsseleinheit der Zieleinheit bis auf eine bestimmte Entfernung genähert hat, muß die Zieleinheit wenigstens in bestimmten Zeitabständen das einleitende Signal aussenden, was einen vergleichsweise hohen Energiebedarf bedeutet. Daher wurden bereits die alternativen Systeme vorgeschlagen, bei denen zur Aktivierung des Authentikationskommunikationsvorgangs zunächst ein Auslöseelement an der Zieleinheit zu betätigen ist. Vorzugsweise ist dieses Auslöseelement Teil einer ohnehin zusätzlich vorgesehenen mechanischen Authentikation, so daß sich dadurch effektiv kein zusätzlicher Bedienvorgang für den Benutzer ergibt. Beispielsweise kann das Auslöseelement im Fall einer Türschließanlage beim Einführen eines mechanischen Schlüsselteils der Schlüsseleinheit in ein Schloß der Zieleinheit oder beim Betätigen eines Türgriffs zum Öffnen der Tür oder über eine Lichtschranke vor einem Türschloß betätigt werden. Gattungsgemäße Authentikationseinrichtungen der genannten, verschiedenen Arten sind in den Offenlegungsschriften EP 0 218 251 B1 und DE 35 00 353 A1 und der Auslegeschrift DE 28 38 056 B1 offenbart.

Allen diesen herkömmlichen gattungsgemäßen Authentikationseinrichtungen ist gemeinsam, daß die elektronische Authentikationskommunikation auf der Seite der Schlüsseleinheit automatisch und somit für den Benutzer unmerkbar und unbeeinflußbar abläuft. Daraus ergeben sich folgende prinzipiellen Schwachpunkte dieser Systeme hinsichtlich Manipulationssicherheit.

Bei Systemen mit unidirektionaler Codeübertragung, bei denen die Schlüsseleinheit durch ein Trigger- oder Energiesignal von der Zieleinheit aktiviert wird und daraufhin eine Codenachricht abgibt, wobei die Signalübertragung vorzugsweise über elektrische oder magnetische Wellen erfolgt, könnte sich ein Unberechtigter mit einer funktionell der Zieleinheit identischen, jedoch über eine erhöhte Sende- und Empfangsleistung verfügenden Einheit dem Besitzer einer rechtmäßigen Schlüsseleinheit nähern, wenn dieser sich fernab von der Zieleinheit befindet. Er könnte dann über seine Einheit die Codenachricht aus der Schlüsseleinheit abrufen und speichern, ohne daß dies der berechtigte Besitzer wahrnimmt. Anschließend kann der Unberechtigte dann mit der aufgezeichneten Codenachricht einen berechtigenden elektronischen Authentikationskommunikationsvorgang mit der Zieleinheit durchführen.

Bei Systemen mit bidirektionalem Codedatenaustausch, z.B. über elektrische oder magnetische Wellen, könnte ein erster Unberechtigter mit einer ersten Einheit die anfängliche Codenachricht aus der Zieleinheit abrufen und mit einem geeigneten Sender auf einen für weite Entfernungen geeigneten Signalträger umsetzen und weitersenden. Ein zweiter Unberechtigter könnte dann mit einer zweiten Einheit dieses Signal empfangen, in das für die rechtmäßige Schlüsseleinheit geeignete Signal umsetzen und an diese übermitteln, wenn er sich in der Nähe der Schlüsseleinheit aufhält. Die Schlüsseleinheit gibt dann ihr Antwortsignal ab, das auf dem umgekehrten Übertragungsweg zur Zieleinheit geleitet wird. Auf diese Weise könnten zwei Unberechtigte eine unberechtigte Freigabe der Zieleinheit erwirken.

Der Erfindung liegt als technisches Problem die Bereitstellung einer Authentikationseinrichtung der eingangs genannten Art zugrunde, bei der Maßnahmen gegen eine auf Seiten der Schlüsseleinheit unbemerkte elektrische Authentikationskommunikation mit der Zieleinheit getroffen sind, so daß insbesondere durch die beiden oben genannten, unberechtigten Manipulationen keine Authentikation durch Unberechtigte möglich ist.

Die Erfindung löst dieses Problem durch die Bereitstellung einer Authentikationseinrichtung mit den Merkmalen des Anspruchs 1. Das unberechtigte Entlocken von Berechtigungscodes aus einer Schlüsseleinheit und das Einspeisen in die Zieleinheit durch Unberechtigte wird bei dieser Einrichtung durch wenigstens eine von drei Maßnahmen verhindert. Zum einen kann vorgesehen sein, einen momentan stattfindenden Authentikationskommunikationsvorgang an der Schlüsseleinheit durch entsprechende Anzeigemittel dem Besitzer der Schlüsseleinheit zur Anzeige zu bringen, so daß dieser rechtzeitig gewarnt wird, wenn ein derartiger Kommunikationsvorgang abläuft, ohne daß dies von ihm beabsichtigt ist.

Zum anderen können an der Schlüsseleinheit Schaltmittel zur Freigabe bzw. Sperrung eines Authentikationskommunikationsvorgangs vorgesehen sein. Die Einrichtung kann dabei so ausgelegt werden, daß der Besitzer der Schlüsseleinheit letzere durch Betätigung der Schaltmittel gegen die Durchführung von Authentikationskommunikationsvorgängen in Zeiträumen sperrt, in denen er sicher ist, daß kein solcher Kommunikationsvorgang ablaufen soll. Es ist zu beachten, daß diese Schaltmittel nicht bereits zur Auslösung eines Authentikationskommunikationsvorgangs dienen, dies erfolgt vielmehr selbsttätig bzw. durch Betätigen eines entsprechenden Bedienelementes an der Authentikationszieleinheit. Alternativ kann die Einrichtung auch so ausgelegt sein, daß die Schaltmittel selbsttätig in geeigneter Weise bei einer ohnehin vorzunehmenden Handhabung der Schlüsseleinheit betätigt werden, z.B. beim Handhaben eines mechanischen Schlüsselteils der Schlüsseleinheit in einem mechanischen Schloß an der Zieleinheit, so daß kein separater Bedienvorgang für den Benutzer erforderlich ist.

Des weiteren können zusätzlich oder anstatt der vorgenannten Mittel Kommunikationsdauer-Überwachungsmittel an der Authentikationszieleinheit vorgesehen sein, welche die Dauer eines Authentikationskommunikationsvorgangs überwachen. Bei unberechtigten Kommunikationsversuchen der oben genannten Art ist die Kommunikationsdauer wegen der größeren Übertragungsstrecke und/oder der erforderlichen Signalumsetzung gegenüber derjenigen bei normalen, befugten Kommunikationsvorgängen erhöht. Durch Festlegen einer geeigneten Maximaldauer für einen Authentikationskommunikationsvorgang kann folglich von den Überwachungsmitteln ein unberechtigter Kommunikationsversuch erkannt werden, woraufhin diese Mittel für eine Sperrung der Authentikation an der Zieleinheit sorgen.

Bei einer nach Anspruch 2 weitergebildeten Einrichtung beinhalten die Anzeigemittel einen akustischen und/oder optischen Signalgeber, der bei jedem Authentikationskommunikationsvorgang für eine bestimmte Zeitdauer aktiviert wird und den Besitzer der Schlüsseleinheit akustisch und/oder optisch von einem stattfindenden Authentikationskommunikationsvorgang informiert.

Eine nach Anspruch 3 weitergebildete Authentikationseinrichtung beinhaltet zusätzlich eine mechanische Authentikationsbetätigung der Schlüsseleinheit an der Zieleinheit als Vorraussetzung für die anschließende Aktivierung eines elektronischen Authentikationskommunikationsvorgangs. An der Schlüsseleinheit ist ein Schaltelement vorgesehen, das durch die mechanische Authentikationsbetätigung der Schlüsseleinheit an der Zieleinheit automatisch mitbetätigt wird und dadurch einen von ihr ansonsten gesperrten elektronischen Authentikationskommunikationsvorgang freigibt. Auf diese Weise ist die Schlüsseleinheit gegen Auslösen von Authentikationsinformationen geschützt, solange sie nicht mechanisch mit der Zieleinheit in Wirkverbindung gebracht wird.

Bei einer nach Anspruch 4 weitergebildeten Authentikationseinrichtung ist die für die Kommunikationsdauer-Überwachungsmittel vorgegebene Kommunikationsmaximaldauer auf einen normalen Authentikationskommunikationsvorgang abgestimmt, bei dem Schlüssel- und Zieleinheit direkt innerhalb einer bestimmten Maximalentfernung miteinander kommunizieren. Unbefugte Kommunikationsversuche über längere Entfernungen und/oder mit indirekter Signalübertragung dauern dagegen länger und können somit von den Kommunikationsdauer-Überwachungsmitteln erkannt werden, die daraufhin die Zieleinheit gegen diesen Authentikationsversuch sperren.

Bevorzugte Ausführungsformen der Erfindung sind in den Zeichnungen dargestellt und werden nachfolgend beschrieben. Hierbei zeigen:
- Fig. 1: ein Blockdiagramm einer Authentikationseinrichtung mit Mitteln zur Anzeige stattfindender Authentikationskommunikationsvorgänge,
- Fig. 2: ein Blockdiagramm einer Authentikationseinrichtung mit schlüsselseitigen Schaltmitteln zur Freigabe bzw. Sperrung von Authentikationskommunikationsvorgängen und
- Fig. 3: ein Blockdiagramm einer Authentikationseinrichtung mit Kommunikationsdauer-Überwachungsmitteln.

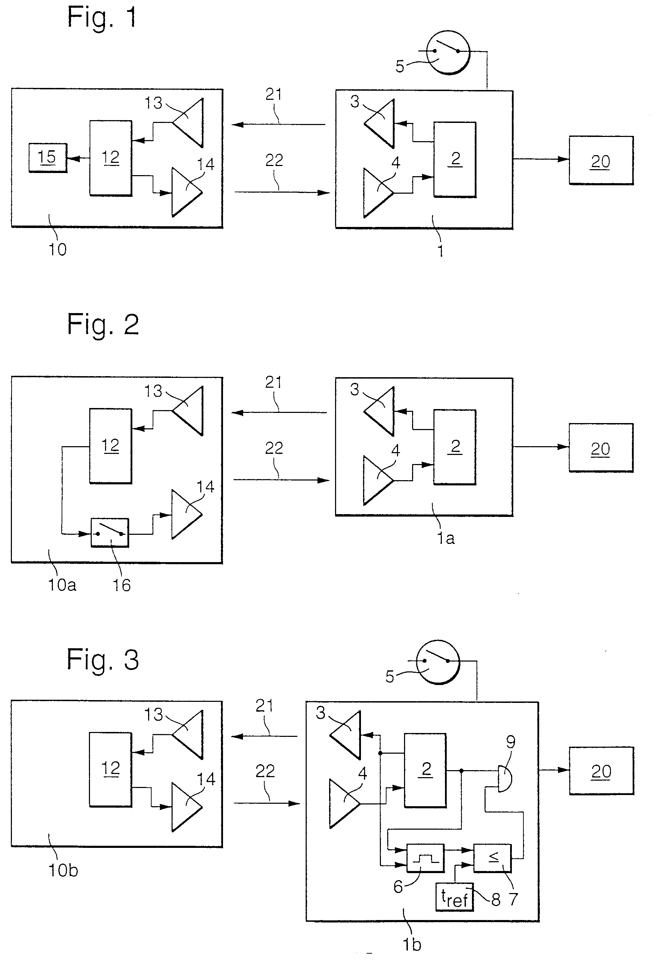

Die in den Fig. 1 bis 3 gezeigten Authentikationseinrichtungen dienen vorliegend beispielhaft dazu, die Betätigung einer Türschließanlage eines Kraftfahrzeuges nur dazu autorisierten Personen zu ermöglichen. Hierfür erhält jede berechtigte Person eine Authentikationsschlüsseleinheit (10), mit der sie sich gegenüber einer fahrzeugseitigen Türschloßeinheit (1) als Authentikationszieleinheit als berechtigt ausweisen kann. Ein Authentikationsvorgang wird z.B. durch die Betätigung eines zugehörigen Fahrzeugtürgriffs ausgelöst, durch welche ein mit der Türschloßeinheit (1) in Verbindung stehender Schalter (5) betätigt wird. Daraufhin erzeugt eine Steuer- und Prüfeinheit (2) der Türschloßeinheit (1) eine Zufallszahlinformation und gibt diese über einen Sender (3) als einleitendes Signal (21) drahtlos, z.B. induktiv, ab.

Wenn sich eine Schlüsseleinheit (10) ausreichend nah an der Türschloßeinheit (1) befindet, vermag sie dieses Signal (21) über einen Empfänger (13) aufzunehmen, der es an eine Steuer- und Codiereinheit (12) weiterleitet, wo die Zufallszahlinformation codiert wird. Die codierte Zufallszahlinformation wird dann über einen Sender (14) als codiertes Authentikationssignal (22) abgegeben und kann von einem Empfänger (4) der Türschloßeinheit (1) aufgenommen werden. Dieser leitet das Signal an die Steuer- und Prüfeinheit (2) zwecks Decodierung und Verifizierung weiter. Wenn dabei das Authentikationssignal als richtig erkannt wird, d.h. wenn die empfangene Zufallszahlinformation nach Decodierung mit der zuvor abgesandten Zufallszahlinformation übereinstimmt, gibt die Türschloßeinheit (1) eine Türverriegelungseinheit (20) frei, so daß die eine oder mehreren zugehörigen Fahrzeugtüren anschließend geöffnet werden können.

Als Schutz vor Manipulationsversuchen besitzt die Authentikationsschlüsseleinheit (10) einen optischen und akustischen Signalgeber (15), der von der Steuer- und Codiereinheit (12) für eine bestimmte Zeitdauer aktiviert wird, sobald diese über den Empfänger (13) ein Eingangssignal erhält. Auf diese Weise erhält der Besitzer der Schlüsseleinheit (10) eine akustische und optische Anzeige über jeden beginnenden Authentikationskommunikationsvorgang und wird dadurch vor eventuellen unberechtigten, nicht von ihm initiierten Authentikationsversuchen gewarnt.

Die in Fig. 2 gezeigte Authentikationseinrichtung entspricht in ihrem Aufbau im wesentlichen derjenigen von Fig. 1, wobei zum besseren Verständnis für funktionell gleiche Teile dieselben Bezugszeichen verwendet sind, so daß insoweit auf die Beschreibung von Fig. 1 verwiesen werden kann. Als Unterschied zur Einrichtung von Fig. 1 ist in der jeweiligen Authentikationsschlüsseleinheit (10a) ein Schaltelement (16) im Signalpfad zwischen der Steuer- und Codiereinheit (12) und dem Sender (14) vorgesehen. Das Schaltelement (16) wirkt derart auf die Steuer- und Codiereinheit (12), daß diese nur bei aktiver Betätigung des Schaltelements (16) auf das eintreffende Signal (21) mit der Zufallszahlinformation hin das Authentikationssignal (22) mit der codierten Zufallszahlinformation an den Sender (14) abgibt.

Das Schaltelement (16) kann beispielsweise ein Drucksensor oder ein Folientaster sein, der nur beim Einführen oder Drehen eines mechanischen Schlüsselteils der Schlüsseleinheit (10a) in einem mechanischen Schloßteil der Türschloßeinheit (1a) im Zuge dieser mechanischen Schlüssel-Schloß-Handhabung betätigt wird. Befindet sich dagegen die Schlüsseleinheit unbenutzt beispielsweise in der Kleidung des Besitzers, so ist das Schaltelement (16) nicht betätigt und sperrt folglich die Schüsseleinheit (10a) für Authentikationskommunikationsvorgänge, so daß vom Besitzer unbemerkte und ungewollte Kommunikationsvorgänge mit der Schlüsseleinheit (10a) nicht möglich sind.

Alternativ zur beschriebenen Ausführung des Schaltelements (16) als ein beim Handhaben eines mechanischen Schlüsselteils in einem mechanischen Schloßteil automatisch betätigter Schalter kann das Schaltelement als unabhängig davon vom Benutzer betätigbarer Schiebeschalter realisiert sein, der vom Benutzer, z.B. während von ihm angenommenen Gefahrensituationen, in denjenigen Schaltzustand verbracht wird, in welchem die Schlüsseleinheit (10a) gegen Authentikationskommunikationsvorgänge gesperrt bleibt. Die bei der Einrichtung von Fig. 1 vorgesehene akustische und optische Warnmeldung bei stattfindenden Kommunikationsvorgängen mittels des Signalgebers (15) kann je nach Bedarf bei der Einrichtung von Fig. 2 entfallen oder zusätzlich zu der Schutzmaßnahme durch das Schaltelement (16) vorgesehen sein.

In Fig. 3 ist eine weitere Authentikationseinrichtung dargestellt, die in ihrem Aufbau wiederum im wesentlichen demjenigen der Fig. 1 bzw. 2 entspricht, wobei funktionell gleiche Teile wiederum mit gleichen Bezugszeichen versehen sind, so daß insoweit auf die obige Beschreibung verwiesen werden kann. Im Unterschied zu den Einrichtungen der Fig. 1 und 2 sind bei der Einrichtung von Fig. 3 in der Türschloßeinheit (1b) Kommunikationsdauer-Überwachungsmittel vorgesehen. Diese beinhalten zum einen eine Zeitmeßeinrichtung (6), die jeweils dann gestartet wird, wenn von der Türschloßeinheit (1b) das einleitende Kommunikationssignal (21) abgegeben wird. Dazu ist die Zeitmeßeinrichtung (6) eingangsseitig mit der Verbindungsleitung zwischen der Steuer- und Prüfeinheit (2) und dem Sender (3) verbunden. Die Zeitmessung durch die Zeitmeßeinrichtung (6) wird gestoppt, sobald das codierte Authentikationsantwortsignal (22) über den Empfänger (4) in der Türschloßeinheit (1b) empfangen und von der Steuer- und Prüfeinheit (2) decodiert und verifiziert wurde.

Das von der Steuer- und Prüfeinheit (2) im Fall einer als richtig erkannten Authentikation abgegebene Freigabesignal wird einerseits einem UND-Glied (9) und andererseits der Zeitmeßeinrichtung (6) als Zeitmeßstoppsignal zugeführt. Die Zeitmeßeinrichtung (6) leitet die gemessene Zeitdauer einem Vergleicher (7) zu, der sie mit einer in einem Speicher (8) abgelegten Maximaldauer (t_{ref}) als Referenzwert vergleicht. Nur wenn die gemessene Zeitdauer nicht größer als die vorgegebene Maximaldauer (t_{ref}) ist, erzeugt der Vergleicher (7) ein Freigabesignal, das einem zweiten Eingang des UND-Gliedes (9) zugeführt wird. Das UND-Glied (9) erzeugt dann das Freigabesignal für die Türverriegelungseinheit (20) genau dann, wenn an seinen beiden Eingängen das Freigabesignal von der Steuer- und Prüfeinheit (2) bzw. vom Vergleicher (7) ansteht.

Dies bedeutet, daß eine Entriegelung der beteiligten Türschlösser nur dann freigegeben wird, wenn die Authentikation erfolgreich abgelaufen ist und die Dauer des elektronischen Authentikationskommunikationsvorgangs innerhalb der vorgegebenen Maximaldauer blieb. Diese Maximaldauer (t_{ref}) ist so festgelegt, daß die normalen, innerhalb einer bestimmten Entfernung direkt ablaufenden Kommunikationsvorgänge zwischen Schlüsseleinheit (10b) und Türschloßeinheit (1b) innerhalb dieser Zeitspanne ablaufen können, während unbefugte Authentikationskommunikationen, die sich über eine längere Entfernung erstrecken oder zusätzliche Signalumsetzungen beinhalten, länger dauern und somit nicht zu einer erfolgreichen Freigabe der Türentriegelung führen.

Es versteht sich, daß die Einrichtung von Fig. 3 in nicht gezeigter Weise bei Bedarf zusätzlich in ihrer jeweiligen Authentikationsschlüsseleinheit (10b) den akustischen und optischen Signalgeber (15) entsprechend der Einrichtung von Fig. 1 zur Abgabe einer Kommunikationswarnmeldung und/oder das Schaltelement (16) entsprechend der Einrichtung von Fig. 2 als weitere Schutzmaßnahme gegen unbefugte und vom rechtmäßigen Besitzer der Authentikationsschlüsseleinheit ungewollte Aktivierungen elektronischer Authentikationskommunikationsvorgänge zwischen der Schlüsseleinheit und der Türschloßeinheit beinhalten kann.

Es versteht sich des weiteren, daß erfindungsgemäße Authentikationseinrichtungen nicht nur, wie beschrieben, zur Authentikation bei Türschließanlagen und elektronischen Wegfahrsperren von Kraftfahrzeugen, sondern überall dort, auch außerhalb der Kraftfahrzeugtechnik, Verwendung finden können, wo Bedarf an einer komfortablen und gegen Mißbrauch zuverlässig gesicherten Nutzungsberechtigungsprüfung gegenüber einer Authentikationszieleinheit unter Verwendung einer Authentikationsschlüsseleinheit besteht.

## Patentansprüche

1. Authentikationseinrichtung mit elektronischer Authentikationskommunikation, insbesondere für eine Türschließanlage und/oder eine elektronische Wegfahrsperre eines Kraftfahrzeuges, mit
- einer Authentikationszieleinheit (1) und
- einer benutzerseitigen Authentikationsschlüsseleinheit (10) zur Benutzerauthentikation gegenüber der Authentikationszieleinheit, wobei die Schlüsseleinheit bei einem Authentikationsvorgang elektronisch mit der Zieleinheit kommuniziert und ein elektronischer Authentikationskommunikationsvorgang selbsttätig bei Annäherung der Schlüsseleinheit an die Zieleinheit oder durch Betätigen eines an der Zieleinheit vorgesehenen Auslöselementes (5) aktiviert wird,
**gekennzeichnet durch**
- an der Authentikationsschlüsseleinheit (10) vorgesehene Anzeigemittel (15), die einen stattfindenen Authentikationskommunikationsvorgang anzeigen und/oder
- an der Authentikationsschlüsseleinheit (10a) vorgesehene Schaltmittel (16) zur Freigabe bzw. Sperrung eines Authentikationskommunikationsvorgangs und/oder
- an der Authentikationszieleinheit (1b) vorgesehene Kommunikationsdauer-Überwachungsmittel (6 bis 9), welche die Dauer eines Authentikationskommunikationsvorgangs überwachen und die Authentikation sperren, wenn die Dauer des Authentikationskommunikationsvorgangs eine vorgegebene Maximaldauer (t_{ref}) überschreitet.

2. Authentikationseinrichtung nach Anspruch 1, weiter
**dadurch gekennzeichnet, daß**
die Anzeigemittel einen akustischen und/oder optischen Signalgeber (15) beinhalten, der bei Ablauf eines Authentikationskommunikationsvorgangs für eine bestimmte Zeitdauer aktiviert wird.

3. Authentikationseinrichtung nach Anspruch 1 oder 2, weiter
**dadurch gekennzeichnet, daß**
- sie zusätzlich eine mechanische Authentikationsbetätigung der Authentikationsschlüsseleinheit (10a) an der Authentikationszieleinheit (1a) als Voraussetzung für die Aktivierung eines elektronischen Authentikationskommunikationsvorgangs beinhaltet und
- die an der Schlüsseleinheit (10a) vorgesehenen Schaltmittel ein Schaltelement (16) umfassen, das durch die mechanische Authentikationsbetätigung der Schlüsseleinheit an der Zieleinheit (1a) mitbetätigt wird und dadurch einen von ihm ansonsten gesperrten elektronischen Authentikationskommunikationsvorgang freigibt.

4. Authentikationseinrichtung nach einem der Ansprüche 1 bis 3, weiter
**dadurch gekennzeichnet, daß**
die für die Kommunikationsdauer-Überwachungsmittel vorgegebene Maximaldauer (t_{ref}) auf einen Authentikationskommunikationsvorgang innerhalb einer bestimmten Maximalentfernung und mit direkter Kommunikationssignalübertragung zwischen Schlüsseleinheit (10b) und Zieleinheit (1b) abgestimmt ist.
